# EUROPEAN PATENT APPLICATION

(11) **EP 4 579 298 A1**
(43) Date of publication of application: **02.07.2025**
(21) Application number: 24221963.2
(22) Date of filing: 19.12.2024
(51) Int. Cl.: G02B 6/293

(54) **GRADIENT-BASED TUNABLE ECHELLE GRATING MUX/DEMUXES**

(30) Priority: 27.12.2023 US 202363615107 P; 26.11.2024 US 202418960584
(71) Applicant: Apple Inc., Cupertino, CA 95014 (US)
(72) Inventor: SKARDA, Jinhie L., Cupertino, 95014 (US); JAIN, Mudit, Cupertino, 95014 (US); TU, Yongming, Cupertino, 95014 (US)
(74) Representative: Rooney, John-Paul

(57) **Abstract**

Embodiments are directed to photonic integrated circuits (200) that include a tunable echelle grating mux/demuxes (201). The tunable echelle grating mux/demuxes (201) are configured to, during operation, selectively generate a monotonic refractive index gradient across a free propagation region (110) in order to adjust the peak transmission wavelength(s) of one or more channels of the echelle grating mux/demux (201). The tunable echelle grating mux/demuxes (201) described herein may tune these peak transmission wavelengths in a power efficient manner as compared to conventional tunable echelle grating mux/demuxes.

## Description

### CROSS-REFERENCE TO RELATED APPLICATIONS

This application is a nonprovisional and claims the benefit under 35 U.S.C. § 119(e) of U.S. Provisional Patent Application No. 63/615,107, filed December 27, 2023, the contents of which are incorporated herein by reference as if fully disclosed herein.

### FIELD

This disclosure relates generally to echelle grating mux/demuxes, as well as photonic integrated circuits incorporating the same, that are tunable using controllable refractive index gradients.

### BACKGROUND

Echelle grating mux/demuxes play an important role in the operation of photonic integrated circuits, as they allow for efficient combination or separation of multiple wavelengths of light carried by waveguides of the photonic integrated circuit. The operation of echelle grating mux/demuxes are highly sensitive to changes in the effective refractive index of the medium that propagates light between its input waveguide(s) and its output waveguide(s). Unintended shifts in this effective refractive index may result in power loss or back reflections to an input waveguide, each of which may adversely impact the operation of the photonic integrated circuit. Accordingly, it may be desirable to provide an echelle grating mux/demux that is tunable to account for unintended changes in effective refractive index.

### SUMMARY

Embodiments described herein are directed to photonic integrated circuits that include a tunable echelle grating mux/demux. In some embodiments the echelle grating mux/demux includes a plurality of waveguides, an echelle grating, a free propagation region positioned between the echelle grating and the plurality of waveguides, and a first heater positioned to generate a first monotonic temperature gradient across the free propagation region. The plurality of waveguides may include a set of input waveguides and a set of output waveguides. In some variations, the first heater does not overlap the free propagation region.

In some variations, the photonic integrated circuit includes a slab waveguide that forms the free propagation region, and the first heater comprises a first doped region of the slab waveguide. Additionally or alternatively, the echelle grating mux/demux comprises a second heater positioned to generate a second monotonic temperature gradient across the free propagation region. In some of these variations, the first heater and the second heater are positioned on opposite sides of the free propagation region. In others of these variations, the first heater and the second heater are positioned on a common side of the free propagation region. The second heater may be positioned so that it does not overlap the free propagation region.

In other embodiments, an echelle grating mux/demux includes a plurality of waveguides having a set of input waveguides and a set of output waveguides, an echelle grating, and a free propagation region positioned between the echelle grating and the plurality of waveguides. In these embodiments, the photonic integrated circuit includes a light source unit optically connected to the set of input waveguides and a controller configured to measure an intensity of light using a power monitor optically connected to at least one of the set of output waveguides. The controller is configured to control, based on the measured intensity of light, the echelle grating mux/demux to generate a monotonic refractive index gradient across the free propagation region.

In some variations, the echelle grating mux/demux includes a first heater positioned on a first side of the free propagation region and the controller is operatively connected to the first heater. The first heater may be controlled to generate the monotonic refractive index gradient. The photonic integrated circuit may include a slab waveguide that forms the free propagation region, and the first heater may include a first doped region of the slab waveguide. In some variations, the echelle grating mux/demux further includes a second heater positioned on the first side of the free propagation region and the controller is operatively connected to the second heater. In other variations, the echelle grating mux/demux further includes a second heater positioned on a second side of the free propagation region opposite the first side. The controller may control operation of the second heater to generate the monotonic refractive index gradient. The properties of the monotonic refractive index gradient may vary depending on which heaters are currently being operated, as well as the operating parameters at which the heaters are being operated (e.g., how much heat each heater is generating).

Additionally or alternatively, the echelle grating mux/demux includes a first force applicator positioned to selectively apply a first force on a first side of the free propagation region, and the controller is operatively connected to the first force applicator. The controller may control the first force applicator to apply the first force at the first side of the free propagation region and may thereby generate the monotonic refractive index gradient. In some variations, the echelle grating mux/demux includes a second force applicator, such that the controller is operatively connected to the second force applicator. The second force applicator may be positioned to selectively apply a second force on a second side of the free propagation region and the. In other variations, the second force applicator may be positioned to selectively apply a second force on the first side of the free propagation region. The controller may control the second force applicator to apply the second force and may thereby generate the monotonic refractive index gradient. The properties of the monotonic refractive index gradient may vary depending on which force applicators are currently being operated, as well as the magnitude of the force(s) applied by the force applicator(s) currently being operated.

Other embodiments are directed to a method of operating an echelle grating mux/demux, where the echelle grating mux/demux includes a set of input waveguides, a set of output waveguides, an echelle grating, and a free propagation region. The method may include generating, during a first period of time, a first monotonic refractive index gradient across the free propagation region that decreases along a direction. The method further includes generating, during a second period of time, a second monotonic refractive index gradient across the free propagation region that increases along the direction. Accordingly, the method may, at different times, correct for peak wavelength shifts in different directions relative to a target peak wavelength shift of a channel of the echelle grating mux/demux.

In some variations, the method includes detecting, prior to the first period of time, a first peak transmission wavelength shift relative to a target peak transmission wavelength in a channel of the echelle grating mux/demux, where the first monotonic refractive index gradient is generated in response to detecting the first peak transmission wavelength shift. In some of these variations, the method includes detecting, prior to the second period of time, a second peak transmission wavelength shift relative to the target peak transmission wavelength in the channel of the echelle grating mux/demux, where the second monotonic refractive index gradient is generated in response to detecting the second peak transmission wavelength shift.

In some instances, generating the first monotonic refractive index gradient during the first period of time includes generating, using a first heater positioned on a first side of the free propagation region, a first monotonic temperature gradient across the free propagation region that decreases in the direction. In some of these variations, a slab waveguide forms the free propagation region, and the first heater comprises a first doped region of the slab waveguide. Additionally or alternatively, generating the second monotonic refractive index gradient during the second period of time may include generating, using a second heater positioned on a second side of the free propagation region, a second monotonic temperature gradient across the free propagation region the increases along the direction. In some of these variations, the second heater comprises a second doped region of the slab waveguide.

In other variations, generating the first monotonic refractive index gradient during the first period of time includes applying a first force on a first side of the free propagation region to generate a first monotonic stress gradient across the free propagation region that increases along the direction. In some of these variations, generating the second monotonic refractive index gradient during the second period of time includes applying a second force on a second side of the free propagation region to generate a second monotonic stress gradient across the free propagation region that decreases along the direction.

In addition to the example aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIGS. 1A and 1B depict top and cross-sectional side views, respectively, of a photonic integrated circuit that includes an echelle grating mux/demux.
FIG. 2A depicts a top view of a variation of a photonic integrated circuit that includes a tunable echelle grating mux/demux that has a heater. FIGS. 2B-2D depict cross-sectional side views of variations of photonic integrated circuits that include heaters that may be used with the tunable echelle grating mux/demuxes described herein. FIGS. 2E and 2F show top views of variations of photonic integrated circuits that include tunable echelle grating mux/demuxes having multiple heaters.
FIG. 3 depicts a top view of a variation of a photonic integrated circuit that includes a tunable echelle grating mux/demux having a set of force applicators.

The use of cross-hatching or shading in the accompanying figures is generally provided to clarify the boundaries between adjacent elements and also to facilitate legibility of the figures. Accordingly, neither the presence nor the absence of cross-hatching or shading conveys or indicates any preference or requirement for particular materials, material properties, element proportions, element dimensions, commonalities of similarly illustrated elements, or any other characteristic, attribute, or property for any element illustrated in the accompanying figures.

It should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

The following disclosure relates to photonic integrated circuits that include a tunable echelle grating mux/demuxes. The tunable echelle grating mux/demuxes described herein are configured to, during operation, selectively generate a monotonic refractive index gradient across a free propagation region in order to adjust the peak transmission wavelength(s) of one or more channels of the echelle grating mux/demux. When a monotonic refractive index gradient is generated across the free propagation region, the effective refractive index of the free propagation region will vary across the free propagation region (e.g., different portions of the free propagation will have different corresponding effective refractive indices). The tunable echelle grating mux/demuxes described herein may tune these peak transmission wavelengths in a power efficient manner as compared to conventional tunable echelle grating mux/demuxes.

The tunable echelle grating mux/demux may be operatively connected to a controller, which may control the tunable echelle grating mux/demux to generate a monotonic refractive index gradient across the free propagation region. For example, the controller may measure an intensity of light using a power monitor optically connected to at least one of the output waveguides of the tunable echelle grating mux/demux (e.g., by tapping off a portion of the light carried by one or more output waveguides), and may use the measured intensity as feedback to control the generation of the monotonic refractive index gradient across the free propagation region.

The tunable echelle grating mux/demuxes described herein may, depending on the photonic integrated circuit incorporating the echelle grating mux/demux, be operated as a multiplexer (e.g., to route, simultaneously or sequentially, light of different wavelengths from multiple input waveguides into a common output waveguide) or as demultiplexer (e.g., to route, simultaneously or sequentially, light of multiple different wavelengths from a common input waveguide to multiple output waveguides).

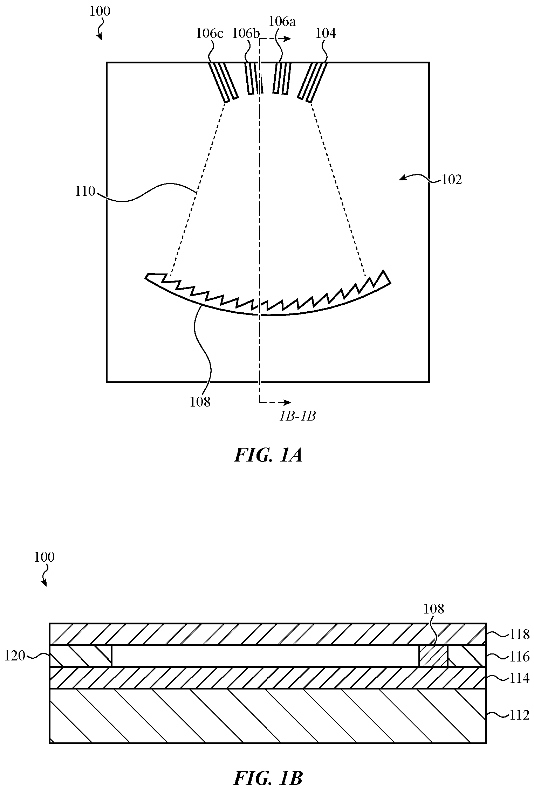

These and other embodiments are discussed below with reference to FIGS. 1A-3. However, those skilled in the art will readily appreciate that the detailed description given herein with respect to these Figures is for explanatory purposes only and should not be construed as limiting.

FIG. 1A shows a top view and FIG. 1B shows a cross-sectional side view (taken along line 1B-1B) of a photonic integrated circuit 100 that includes an echelle grating mux/demux 102. The echelle grating mux/demux 102 has a plurality of waveguides that includes a set of (e.g., one or more) input waveguides (shown in FIG. 1A as a single input waveguide 104) and a set of (e.g., one or more) output waveguides. For example, in the variation shown in FIG. 1A, the set of input waveguides includes a single input waveguide 104 and the set of output waveguides includes a plurality of output waveguides 106a-106c. The echelle grating mux/demux 102 further includes an echelle grating 108 positioned to redirect light received from the one or more input waveguides to the one or more output waveguides. A free propagation region 110 is positioned between the echelle grating 108 and the plurality of waveguides. Specifically, the free propagation region 110 is positioned between the echelle grating 108 and the one or more input waveguides (e.g., input waveguide 104) and is also positioned between the echelle grating 108 and the one or more output waveguides (e.g., the plurality of output waveguides 106a-106c).

Light may be introduced into the free propagation region 110 from an input waveguide (e.g., input waveguide 104) and may traverse the free propagation region 110 until it reaches the echelle grating 108. The echelle grating 108 is made from a reflective material (e.g., reflective at wavelengths of light carried by the echelle grating mux/demux 102) and may include a groove pattern that causes incident light from the input waveguide to diffract as it is redirected toward the set of output waveguides. The echelle grating 108 disperses light based on its wavelength, and thus the light that couples between a particular input waveguide and a particular output waveguide depends on the wavelength of light that is emitted into the free propagation region 110 from that input waveguide.

While the echelle grating mux/demux 102 of FIG. 1A is shown configured as a demultiplexer having a single input waveguide 104 and a plurality of output waveguides 106a-106c, it should be appreciated that in other instances the echelle grating mux/demux 102 may be configured as a multiplexer with a plurality of input waveguides and a single output waveguide. In still other variations, the echelle grating mux/demux 102 may be configured as a multiplexer or a demultiplexer having a plurality of input waveguides and a plurality of output waveguides. The principles described herein may be applied to any echelle grating mux/demux 102 that is capable of routing light between at least one input waveguide and at least one output waveguide.

The set of input waveguides, the set of output waveguides and the free propagation region 110 may be formed from corresponding portions of a waveguide layer of the photonic integrated circuit 100. Specifically, the photonic integrated circuit 100 may include a substrate 112 and a set of layers supported by the substrate 112. The set of layers includes a first cladding layer 114 and a waveguide layer 116 positioned on the first cladding layer 114, such that the first cladding layer 114 is positioned between the waveguide layer 116 and the substrate 112. The waveguide layer 116 may be patterned or otherwise formed to define any input waveguides, output waveguides, and the free propagation region 110 of the echelle grating mux/demux 102. For example, the waveguide layer 116 may form a slab waveguide between the echelle grating 108 and the input and output waveguides 104, 106a-106c, such that a portion of the slab waveguide acts as the free propagation region 110. For the purpose of discussion, the free propagation region 110 is considered to include the portion of the waveguide layer 116 (e.g., the portion of the slab waveguide) through which light may travel to pass through any pair of input and output waveguides. In other words, portions of the waveguide layer outside of the free propagation region 110 will not, during operation of the echelle grating mux/demux 102, receive light that passes between any input waveguide and any output waveguide of the echelle grating mux/demux 102.

The first cladding layer 114 may provide vertical optical confinement to light travelling through the waveguide layer 116 (e.g., to light carried by the echelle grating mux/demux 102). In some instances, one or more additional surfaces of the waveguide layer 116 may be covered with a second cladding layer 118, which may also provide vertical optical confinement to light traveling through the waveguide layer 116. In some instances, the photonic integrated circuit 100 may include a third cladding layer 120 that is coplanar with the waveguide layer 116, which may act to define the boundaries of the input and output waveguides of the echelle grating mux/demux 102 (and thereby provide horizontal optical confinement to light travelling through the waveguide layer 116). For example, a portion of the third cladding layer 120 shown in FIG. 1B may partially define the boundary of the second output waveguide 106b of FIG. 1A. While the second and third cladding layers 118, 120 are shown in FIG. 1B as being separate layers, it should be appreciated that the second and third cladding layers 118, 120 may be formed as different portions of the same layer (e.g., as part of a common processing step).

The various layers of the photonic integrated circuit 100 may be formed from any suitable materials depending on the wavelength or wavelengths of light that will be carried by the waveguide layer 116. For example, in some variations, the photonic integrated circuit 100 is configured to carry one or more wavelengths of infrared light. In some of these variations, the waveguide layer 116 is formed from silicon, silicon nitride, silica, or the like, the first, second, and third cladding layers 114, 118, 120 are formed from one or more dielectric materials such as silicon dioxide, and the substrate 112 is formed from silicon. In some of these instances, the photonic integrated circuit 100 may be manufactured using silicon-on-insulator technology.

Echelle grating mux/demuxes are wavelength-specific structures, such that the amount of light that couples between a given input waveguide and a given output waveguide is dependent on the wavelength of light introduced into the input waveguide. Accordingly, each pair of input waveguide and output waveguide of an echelle grating mux/demux (also referred to herein as a "channel" of the echelle grating mux/demux) has a peak transmission wavelength that represents the wavelength of light that has the maximum transmission between the input waveguide and the output waveguide. Accordingly, depending on the specific wavelengths that are being multiplexed or demultiplexed, the echelle grating mux/demux 102 may be designed to have a particular corresponding peak transmission wavelength for each channel of the echelle grating mux/demux 102. For example, the echelle grating mux/demux 102 may be designed to have a target peak transmission wavelength for a first channel. The photonic integrated circuit 100 may be configured to generate light at the target peak transmission wavelength and transmit the light to the echelle grating mux/demux 102 to route the light between the input and output waveguides for the first channel.

In practice, however, the actual peak transmission wavelength for a given channel is highly dependent on the refractive index of the free propagation region 110. For example, manufacturing variations (e.g., variation in the thickness of the waveguide layer 116, stresses applied to the waveguide layer 116 during manufacturing or packaging of the photonic integrated circuit 100) may cause these peak transmission wavelengths to deviate from the intended target peak transmission wavelengths for the channels of the echelle grating mux/demux 102. This may cause performance variations across different devices. Similarly, within a given device, the performance of an echelle grating mux/demux may vary over time due to changes in operating temperature and/or local stresses that may be applied to the echelle grating mux/demux.

To correct for these performance variations, echelle grating mux/demuxes may be configured to have a free propagation region with a tunable refractive index. Typically, these tunable echelle grating mux/demuxes are configured with a heater that is positioned on top of the free propagation region. The heater is operated to uniformly heat the free propagation region (and thereby uniformly change the effective refractive index of the free propagation region), which may thereby change the peak transmission wavelengths of the various channel of the echelle grating mux/demux. One such example is disclosed in U.S. Pat. No. US11,561,346B2 and titled "Tunable echelle grating," the content of which is hereby incorporated in its entirety. Such heaters have relatively large power consumption requirements as compared to the tunable echelle grating mux/demuxes described herein. Additionally, because a heater can only change the refractive index in a single direction, this may require that such an echelle grating mux/demux be designed to the worst-case operating conditions, such that the heater is always is always operable to achieve a desired peak transmission wavelength for a given channel. This may further increase the average power consumption of the echelle grating mux/demux during typical operating conditions.

Conversely, the tunable echelle grating mux/demuxes described herein are configured to generate a monotonic refractive index gradient across its free propagation region. As used herein, a "monotonic" gradient (e.g., a monotonic refractive index gradient, a monotonic temperature gradient) refers to a gradient in which the values of that gradient either increase monotonically (e.g., are non-decreasing) or decrease monotonically (e.g., are non-increasing) along a particular direction. A non-uniform change in effective refractive index across a free propagation of an echelle grating mux/demux may generate a shift in peak transmission wavelength of a channel. This shift may require a smaller maximum effective refractive index change in the free propagation region as compared to a tunable echelle grating mux/demux that generates a uniform change in the effective refractive index the free propagation region. This may reduce the power required to generate a given shift in the peak transmission wavelength of a channel. Additionally, some variations of the tunable echelle grating mux/demuxes described herein may be configured to selectively generate monotonic refractive index gradients increase in different directions across its free propagation region. This may allow the tunable echelle grating mux/demux to selectively shift the peak transmission wavelength in a first direction during a first period of time (e.g., to reduce the peak transmission wavelength for a given channel) or in a second direction during a second period of time (e.g., to increase the peak transmission wavelength for a given channel). This may allow the design of the tunable echelle grating mux/demux to be designed for typical operating conditions, as the tunable echelle grating mux/demux may be able to correct for peak transmission wavelength shifts in either direction.

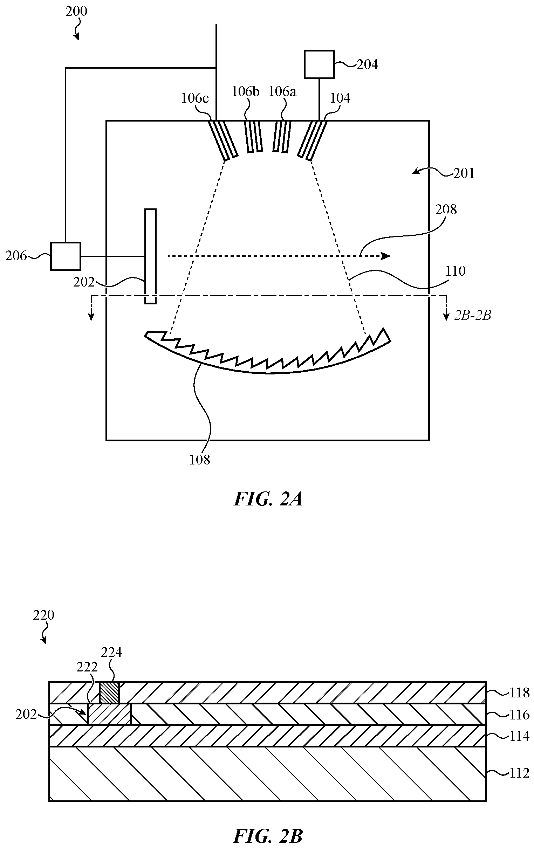

In some variations, a tunable echelle grating mux/demux as described herein may utilize one or more heaters, each of which may be used to generate a corresponding monotonic temperature gradient across a free propagation region. A monotonic temperature gradient generated in this way may generate a monotonic refractive index gradient across the free propagation region. For example, FIG. 2A shows a top view of a variation of a photonic integrated circuit 200 that includes a tunable echelle grating mux/demux 201. The tunable echelle grating mux/demux 201 may be configured as described above with respect to the echelle grating mux/demux 102 of FIGS. 1A and 1B, except that the tunable echelle grating mux/demux 201 includes a heater 202. In these variations, the heater 202 is controllable to selectively generate heat. The heater 202 is positioned relative to the free propagation region 110 such that that heat generated by the heater 202 generates a monotonic temperature gradient across the free propagation region 110.

For example, as shown in FIG 2A, the heater 202 is positioned to a first side of the free propagation region 110. As the heater 202 is operated to generate heat, the heat generated by the heater 202 will spread across the free propagation region 110 (e.g., through the portion of the waveguide layer 116 forming the free propagation region 110). The free propagation region 110 is not uniformly heated by the heater 202, and thus the temperature of the free propagation region 110 will decrease along a first gradient direction 208 as shown in FIG. 2A. In this way, the heater 202 may generate a monotonic temperature gradient across the free propagation region 110 that decreases along the first gradient direction 208 (e.g., the temperature at the first side of the free propagation region 110 is higher than the temperature at a second side of the free propagation region 110 opposite the first side).

Because the effective refractive index of the free propagation region 110 depends on the temperature of the free propagation region 110, the monotonic temperature gradient generated by the heater 202 will also generate a monotonic refractive index gradient across the free propagation region 110. In these instances, the monotonic refractive index gradient decreases along the first gradient direction 208. In other words, the effective refractive index of the free propagation region 110 will decrease from the first side of the free propagation region 110 to the second side of the free propagation region 110. This non-uniform refractive index change may be used to tune the peak transmission wavelengths for one or more channels of the tunable echelle grating mux/demux.

For example, in the variation shown in FIG. 2A, the input waveguide 104 may be optically connected to a light source unit 204 that is configured to generate light at a particular wavelength or range of wavelengths, such that the input waveguide 104 receives light from the light source unit 204. The light source unit 204 includes a set of light sources (not shown), each of which is selectively operable to emit light at a corresponding set of wavelengths. Each light source may be any component capable of generating light at one or more particular wavelengths, such as a light-emitting diode or a laser. A laser may include a semiconductor laser, such as a laser diode (e.g., a distributed Bragg reflector laser, a distributed feedback laser, an external cavity laser), a quantum cascade laser, or the like. A given light source may be single-frequency (fixed wavelength) or may be tunable to selectively generate one of multiple wavelengths (i.e., the light source may be controlled to selectively output different wavelengths at different times). The set of light sources may include any suitable combination of light sources, and collectively may be operated to generate light at any of a plurality of different wavelengths. To the extent the light source unit 204 is capable of generating multiple different wavelengths, the light source unit 204 may be configured to generate different wavelengths of light simultaneously and/or sequentially. The light source unit 204 may be integrated into the photonic integrated circuit 200 or may be separate from the photonic integrated circuit 200 and couple light into the photonic integrated circuit 200. In variations where the tunable echelle grating mux/demux 201 includes multiple input waveguides 104, different input waveguides may receive light (e.g., from the light source unit 204) simultaneously or at different times, depending on the operation of the photonic integrated circuit 200.

The light source unit 204 may generate light that is introduced into the free propagation region 110 through the input waveguide 104, and at least a portion of the light may be received by a corresponding output waveguide of the tunable echelle grating mux/demux 201. The amount of light that is transferred between the input waveguide and the output waveguide depends on the wavelength of the light and the peak transmission wavelength for that channel. Accordingly, it may be desirable to tune the peak transmission wavelength of a particular channel to a target peak transmission wavelength during operation of the tunable echelle grating mux/demux 201.

For example, the tunable echelle grating mux/demux 201 shown in FIG. 2A includes a controller 206 that is operatively connected to the heater 202. The controller 206 may control the heater 202 to selectively generate heat and thereby tune the peak transmission wavelength of a channel of the echelle grating mux/demux 201. In some of these variations, the controller 206 may operate as a closed loop system in which the controller 206 measures an amount of light that is transferred for a given channel. Specifically, a portion of the light received by the output waveguide of a channel (e.g., output waveguide 106c in FIG. 2A) may be tapped off of the output waveguide and measured by the controller 206 (e.g., using an optical power monitor optically connected to at least one of the set of output waveguides). The measured portion of light may operate as a feedback signal to control the heater 202 to selectively generate a monotonic temperature gradient across the free propagation region 110. The controller 206 may include any combination of software, hardware, and firmware as needed to perform these functions (including any of the method steps described below), including, for example, one or more processors and/or application-specific integrated circuits (ASICs). While a single controller 206 is shown in FIG. 2A, it should be appreciated that the functionality of the controllers described herein may be distributed across different components (e.g., different processors), which may collectively act to perform the functions of the controller.

FIGS. 2B-2D show variations of the heater 202 that may be used with the tunable echelle grating mux/demuxes described herein. Specifically, FIG. 2B shows a cross-sectional view of a first variation of a photonic integrated circuit 220 (taken along line 2B-2B of the photonic integrated circuit 200 of FIG. 2A) in which the heater 202 is coplanar with the waveguide layer 116 that forms the free propagation region 110. In some of these variations, the heater 202 may be formed from a doped region 222 of the waveguide layer 116, such that the doped region 222 has a higher electrical conductivity than the surrounding portions of the waveguide layer 116. In other words, a slab waveguide may form the free propagation region, and the heater 202 is formed from a doped region 222 of the slab waveguide. For example, in instances where the waveguide layer 116 is formed from silicon, the waveguide layer 116 may be doped with a Group III or a Group V material to form the doped region 222. While shown in FIG. 2B as extending fully through the waveguide layer 116 (e.g., from a top surface of the waveguide layer to a bottom surface of the waveguide layer), the doped region 222 may alternatively extend only partially through the waveguide layer 116 (e.g., only a portion of the thickness of the waveguide layer 116 is doped to form the doped region 222).

In variations in which the photonic integrated circuit 220 includes a second cladding layer 118 positioned on the waveguide layer, the photonic integrated circuit 220 may include a set of vias 224 that extend through the second cladding layer 118. The set of vias 224 may provide an electrical connection between the doped region 222 and the controller 206. To generate heat using the heater 202, the controller 206 may drive current through the doped region 222 (e.g., via the set of vias 224).

In instances where the heater 202 is coplanar with the waveguide layer 116, the heater 202 may be able to directly heat the waveguide layer 116 (e.g., as opposed to indirectly heating the waveguide layer 116 through another layer such as the second cladding layer 118). This may reduce the power required to generate a particular monotonic temperature gradient across the free propagation region 110. Additionally, in variations where the heater 202 is coplanar with waveguide layer 116, it may be desirable to position the heater 202 such that it does not overlap the free propagation region 110. In other words, the doped region 222 is positioned outside of the free propagation region 110. In these instances, light passing through the free propagation region 110 during operation of the echelle grating mux/demux 201 will not interact with the heater 202 (e.g., with the doped region 222 of the slab waveguide), which may otherwise cause optical losses.

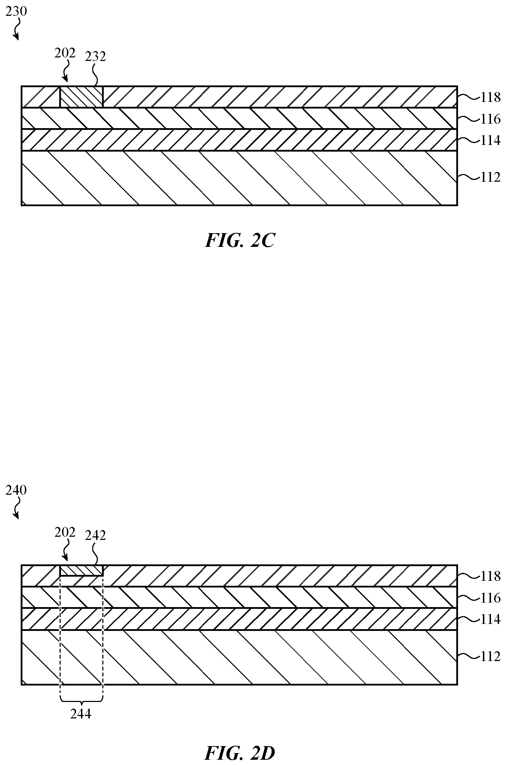

In other variations, the heater may be positioned above the waveguide layer 116. For example, FIG. 2C shows a cross-sectional view of another variation of a photonic integrated circuit 230 (taken along line 2B-2B of the photonic integrated circuit 200 of FIG. 2A) in which the heater 202 is positioned on a top surface of the waveguide layer 116. In these variations, an electrically conductive material 232 (e.g., gold, nickel, titanium, chromium, or the like) that forms the heater 202 may be deposited or otherwise positioned on a top surface of the waveguide layer 116, such that the electrically conductive material 232 is in direct contact with the waveguide layer 116. In instances where the photonic integrated circuit 230 includes a second cladding layer 118, the electrically conductive material 232 may be coplanar with the second cladding layer 118. To operate the heater 202, the controller 206 may drive current through the electrically conductive material 232 and thereby generate heat.

In other variations, the heater may be positioned on top of the second cladding layer 118. For example, FIG. 2D shows a cross-sectional view of another variation of a photonic integrated circuit 240 (taken along line 2B-2B of the photonic integrated circuit 200 of FIG. 2A) in which the heater 202 is positioned on a top surface of the second cladding layer 118. In these variations, an electrically conductive material 242 (e.g., gold, nickel, titanium, chromium, or the like) may be deposited or otherwise positioned on a top surface of the second cladding layer 118. In some variations, a portion 244 of the second cladding layer 118 may be thinned relative to surrounding portions of the second cladding layer 118, such that the electrically conductive material 242 (and thereby, the heater 202) is positioned closer to the waveguide layer 116. To operate the heater 202, the controller 206 may drive current through the electrically conductive material 242 and thereby generate heat. In some instances where the heater 202 is not coplanar with the waveguide layer 116, it may be possible for the heater to be positioned to slightly overlap the free propagation region 110 so long as the overlap is sufficient small as to still allow the heater 202 to create a monotonic temperature gradient across the free propagation region 110. In these instances, a portion of the heater 202 may be positioned above light that is traversing the free propagation region 110. In other instances, the heaters 202 shown in FIG. 2C and 2D may be positioned such that they do not overlap the free propagation region 110 (e.g., the entire heater 202 is positioned to a side of the boundary of the free propagation region).

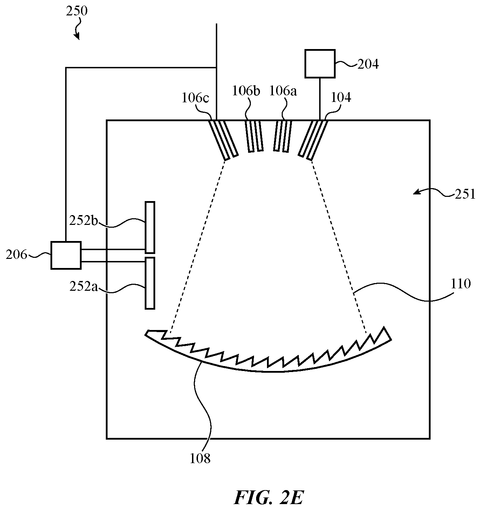

While the tunable echelle grating mux/demux 201 of FIG. 2A includes a single heater, it should be appreciated that in other instances the tunable echelle grating mux/demux 201 may include multiple heaters. For example, FIG. 2E shows a variation of a photonic integrated circuit 250 that includes an echelle grating mux/demux 251 that has multiple heaters. The photonic integrated circuit 250 and the echelle grating mux/demux 251 may be configured the same as the photonic integrated circuit 200 and the echelle grating mux/demux 201 of FIG. 2A, except that the heater 202 has been replaced with a first heater 252a and a second heater 252b. In this variation, the first heater 252a and the second heater 252b are positioned on a common side of the free propagation region 110 and may be independently controllable by the controller 206. One or both of the heaters 252a, 252b may be operated to generate a monotonic temperature gradient that decreases along a direction. For example, during a first period of time, a single heater (e.g., first heater 252a) may be operated to generate heat and thereby generate a first monotonic temperature gradient in which the temperature decreases along the direction. During a second period of time, both heaters 252a, 252b may be operated simultaneously to generate heat and thereby generate a second monotonic temperature gradient that also decreases along the direction. The single heater may be operated to generate smaller peak transmission wavelength shifts in a given direction, and both heaters may be operated simultaneously to generate larger peak transmission wavelength shifts in the same direction. In other instances, the first heater 252a and the second heater 252b may be positioned on the same side of the free propagation region and controlled together, thereby treating the heaters 252a, 252b as a single heater with two spaced segments.

While shown in FIG. 2E as having the same size, it should be appreciated that the first heater 252a and the second heater 252b may have different sizes (e.g., the first heater 252a may be larger than the second heater 252b). Additionally, the first heater 252a and the second heater 252b may be configured in any suitable manner, such as described with respect to FIGS. 2B-2D. For example, in some variations, the first heater 252a may be formed from a first doped region of a slab waveguide (e.g., on a first side of the free propagation region 110) and the second heater 252b may be formed from a second doped region of the slab waveguide (e.g., also on the first side of the free propagation region 110).

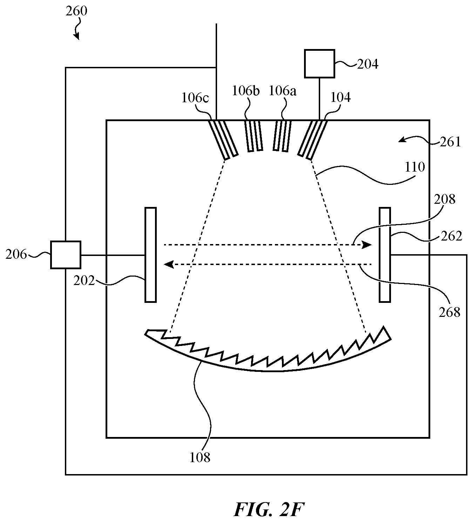

Additionally or alternatively, the tunable echelle grating mux/demuxes described herein may include multiple heaters that are positioned on opposite sides of the free propagation region. For example, FIG. 2F shows a variation of a photonic integrated circuit 250 that includes an echelle grating mux/demux 251, which are configured the same as the photonic integrated circuit 200 and the echelle grating mux/demux 201 of FIG. 2A, except that the heater 202 has been replaced with a first heater 262a and a second heater 262b. In this variation, the first heater 262a and the second heater 262b are positioned on opposite sides of the free propagation region 110 and are independently controllable by the controller 206. The first and second heaters 262a, 262b may be operable to generate monotonic temperature gradients that decrease in opposite directions across the free propagation region 110.

Specifically, the first heater 262a is positioned on a first side of the free propagation region 110 and may be operated to increase the temperature on a first side of the free propagation region 110 relative to the temperature on an opposite second side of the free propagation region 110. This may generate, during certain periods of time, a first monotonic temperature gradient that decreases along a first gradient direction 208 across the free propagation region 110. The second heater 262b is positioned on a second side of the free propagation region 110 opposite the first side and may be operated to increase the temperature on the second side of the free propagation region 110 relative to the first side of the free propagation region 110. This may generate, during other periods of time, a second monotonic temperature gradient that decreases along a second gradient direction 268 across the free propagation region. Accordingly, depending on which heater is generating heat, the echelle grating mux/demux 261 may be operated to selectively generate a monotonic temperature gradient that either increases or decreases along a given direction.

The first heater 262a and the second heater 262b may be configured in any suitable manner, such as described with respect to FIGS. 2B-2D. For example, in some variations, the first heater 262a may be formed from a first doped region of a slab waveguide (e.g., on a first side of the free propagation region 110) and the second heater 262b may be formed from a second doped region of the slab waveguide (e.g., positioned on a second side of the free propagation region 110). The first and second heaters 262a, 262b may be positioned to each not overlap the free propagation region 110.

The temperature gradients generated by the first and second heaters 262a, 262b may be used to tune a peak transmission wavelength of a given channel in multiple directions at different times, thereby allowing the peak transmission wavelength to be selectively increased or decreased. For example, during a first period of time, the echelle grating mux/demux 261 may be operated to generate a first monotonic refractive index gradient across the free propagation region that decreases along a direction (e.g., along the first gradient direction 208 in FIG. 2F). Specifically, the first heater 262a may be operated during the first period of time to generate a first monotonic temperature gradient that decreases along the direction. Prior to the first time period, the controller 206 may detect (e.g., using measured light from an optical power monitor as feedback) a first peak transmission wavelength shift relative to a target peak transmission wavelength in a channel of the echelle grating mux/demux 261. The controller 206 may control the echelle grating mux/demux 261 to generate the first monotonic refractive index gradient in response to detecting the first peak transmission wavelength shift, which may move the peak transmission wavelength back toward the target peak transmission wavelength. In this way, the first heater 262a may be used to correct peak transmission wavelength shifts that occur in a first direction (e.g., to red shift the peak transmission wavelength towards a target peak transmission wavelength).

Conversely, during a second period of time, the echelle grating mux/demux 261 may be operated to generate a second monotonic refractive index gradient across the free propagation region that increases along the direction (e.g., along the first gradient direction 208 in FIG. 2F). Specifically, the second heater 262b may be operated during the second period of time to generate a second monotonic temperature gradient that increases along the direction, and decreases along an opposite direction (e.g., along the second gradient direction 268 of FIG. 2F). Prior to the second time period, the controller 206 may detect (e.g., using measured light from an optical power monitor as feedback) a second peak transmission wavelength shift relative to a target peak transmission wavelength in a channel of the echelle grating mux/demux 261. The second peak transmission wavelength shift may be in a second direction opposite the first direction of the first peak transmission wavelength shift. The controller 206 may control the echelle grating mux/demux 261 to generate the second monotonic refractive index gradient in response to detecting the second peak transmission wavelength shift, which may move the peak transmission wavelength back toward the target peak transmission wavelength from the second direction. Accordingly, the first heater 262a may be used to correct peak transmission wavelength shifts in the first direction (e.g., to red shift the peak transmission wavelength toward the target peak transmission wavelength), and the second heater 262b may be used to correct peak transmission wavelength shifts in the second direction (e.g., to blue shift the peak transmission wavelength toward the target peak transmission wavelength).

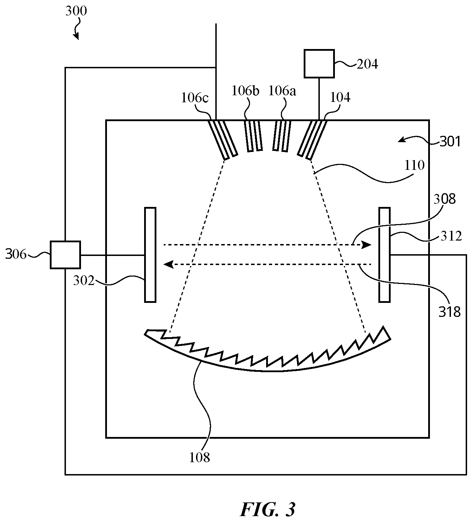

In addition to or instead of using heaters to generate monotonic refractive index gradients, variations of the echelle grating mux/demuxes described herein may include one or more force applicators that are operable to generate a monotonic refractive index across the free propagation region. For example, FIG. 3 shows a top view of a variation of a photonic integrated circuit 300 that includes a tunable echelle grating mux/demux 301 that may be configured as described above with respect to the echelle grating mux/demux 102 of FIGS. 1A and 1B, except that the tunable echelle grating mux/demux 301 includes a set of force applicators. In the variation shown in FIG. 3, the echelle grating mux/demux 301 includes force applicators positioned to apply forces on opposite sides of the free propagation region 110 (e.g., a first force applicator 302 positioned to apply a first force on a first side of the free propagation region 110 and a second force applicator 312 positioned to apply a second force on an opposite second side of the free propagation region 110). Additionally or alternatively, the echelle grating mux/demux 301 may include multiple force applicators positioned to apply forces on a common side of the free propagation region 110. In still other variations, the echelle grating mux/demux 301 may instead include a single force applicator positioned to apply a force on a first side of the free propagation region 110.

Each force applicator is positioned and operable to apply a force to a respective portion of a slab waveguide that forms the free propagation region 110, which may thereby generate a monotonic stress gradient across the free propagation region 110. For example, the first force applicator 302 may apply a first force to the waveguide layer 116 on a first side of the free propagation region 110, which may generate a first monotonic stress gradient across the free propagation region 110 that decreases in a first direction (e.g., along a first gradient direction 308 shown in FIG. 3). This in turn may generate a first monotonic refractive index gradient across the free propagation region 110 that increases along the first direction. Conversely, the second force applicator 312 may apply a second force to the waveguide layer 116 on a second side of the free propagation region 110, which may generate a second monotonic stress gradient across the free propagation region 110 that decreases in a second direction (e.g., along a second gradient direction 318 shown in FIG. 3). This in turn may generate a second monotonic refractive index gradient across the free propagation region 110 that increases along the second direction.

In this way, the first and second force applicators 302, 312 may be operated to selectively generate monotonic refractive index gradients across the free propagation region 110 that either increase or decrease along a given direction. Accordingly, a controller 306 may operate the first and second force applicators 302, 312 to correct for peak transmission wavelength shifts relative to a target peak transmission wavelength, such as described in more detail with respect to the echelle grating mux/demux 261 of FIG. 2F. Accordingly, the first force applicator 302 may be used to correct peak transmission wavelength shifts in a first direction (e.g., to blue shift the peak transmission wavelength toward the target peak transmission wavelength), and the second force applicator 312 may be used to correct peak transmission wavelength shifts in a second direction opposite the first direction (e.g., to red shift the peak transmission wavelength toward the target peak transmission wavelength).

The echelle grating mux/demuxes described herein may utilize any force applicator to apply a force to the waveguide layer 116 of the photonic integrated circuits described herein. For example, in some variations a force applicator may utilize a piezoelectric actuator to apply a force to the waveguide layer 116. In other variations, the force applicator may utilize an electromagnetic actuator to apply a force to the waveguide layer 116. It should be appreciated that a wide range of devices may be used to controllable apply forces to the photonic integrated circuit 300.w

Although the disclosure above is described in terms of various exemplary embodiments and implementations, it should be understood that the various features, aspects and functionality described in one or more of the individual embodiments are not limited in their applicability to the particular embodiment with which they are described, but instead can be applied, alone or in various combinations, to one or more of the some embodiments of the invention, whether or not such embodiments are described and whether or not such features are presented as being a part of a described embodiment. Thus, the breadth and scope of the present invention should not be limited by any of the above-described exemplary embodiments but is instead defined by the claims herein presented.

### ADDITIONAL NUMBERED STATEMENTS

1. A photonic integrated circuit, comprising:
   an echelle grating mux/demux comprising:
   a plurality of waveguides comprising:
      a set of input waveguides; and
      a set of output waveguides;
   an echelle grating;
   a free propagation region positioned between the echelle grating and the plurality of waveguides;
   a first heater positioned to generate a first monotonic temperature gradient across the free propagation region.
2. The photonic integrated circuit of statement 1, wherein:
   the first heater does not overlap the free propagation region.
3. The photonic integrated circuit of statement 1 or statement 2, comprising:
   a slab waveguide that forms the free propagation region, wherein:
   the first heater comprises a first doped region of the slab waveguide.
4. The photonic integrated circuit of any of statements 1 to 3, wherein:
   the echelle grating mux/demux comprises a second heater positioned to generate a second monotonic temperature gradient across the free propagation region.
5. The photonic integrated circuit of statement 4, wherein:
   the first heater and the second heater are positioned on opposite sides of the free propagation region.
6. The photonic integrated circuit of statement 4, wherein:
   the first heater and the second heater are positioned on a common side of the free propagation region.
7. A photonic integrated circuit, comprising:
   an echelle grating mux/demux comprising:
      a plurality of waveguides comprising:
         a set of input waveguides; and
         a set of output waveguides;
      an echelle grating; and
      a free propagation region positioned between the echelle grating and the plurality of waveguides;
   a light source unit optically connected to the set of input waveguides; a controller configured to:
      measure an intensity of light using a power monitor optically connected to at least one of the set of output waveguides; and
      control, based on the measured intensity of light, the echelle grating mux/demux to generate a monotonic refractive index gradient across the free propagation region.
8. The photonic integrated circuit of statement 7, wherein:
   the echelle grating mux/demux comprises a first heater positioned on a first side of the free propagation region; and
   the controller is operatively connected to the first heater.
9. The photonic integrated circuit of statement 8, wherein:
   the echelle grating mux/demux comprises a second heater positioned on the first side of the free propagation region; and
   the controller is operatively connected to the second heater.
10. The photonic integrated circuit of statement 8, wherein:
   the echelle grating mux/demux comprises a second heater positioned on a second side of the free propagation region opposite the first side; and
   the controller is operatively connected to the second heater.
11. The photonic integrated circuit of any of statements 8-10, comprising:
   a slab waveguide that forms the free propagation region, wherein:
   the first heater comprises a first doped region of the slab waveguide.
12. The photonic integrated circuit of statement 7, wherein:
   the echelle grating mux/demux comprises a first force applicator positioned to selectively apply a force on a first side of the free propagation region; and
   the controller is operatively connected to the first force applicator.
13. The photonic integrated circuit of statement 8, wherein:
   the echelle grating mux/demux comprises a second force applicator positioned to selectively apply a force on a second side of the free propagation region; and
   the controller is operatively connected to the second force applicator.
14. A method of operating an echelle grating mux/demux comprising a set of input waveguides, a set of output waveguides, an echelle grating, and a free propagation region, the method comprising:
   generating, during a first period of time, a first monotonic refractive index gradient across the free propagation region that decreases along a direction; and
   generating, during a second period of time, a second monotonic refractive index gradient across the free propagation region that increases along the direction.
15. The method of statement 14, wherein generating the first monotonic refractive index gradient during the first period of time comprises:
   generating, using a first heater positioned on a first side of the free propagation region, a first monotonic temperature gradient across the free propagation region that decreases in the direction.
16. The method of statement 15, wherein:
   a slab waveguide forms the free propagation region; and
   the first heater comprises a doped region of the slab waveguide.
17. The method of statement 15 or statement 16, wherein generating the second monotonic refractive index gradient during the second period of time comprises:
   generating, using a second heater positioned on a second side of the free propagation region, a second monotonic temperature gradient across the free propagation region the increases along the direction.
18. The method of statement 14, wherein generating the first monotonic refractive index gradient during the first period of time comprises:
   applying a first force on a first side of the free propagation region to generate a first monotonic stress gradient across the free propagation region that increases along the direction.
19. The method of statement 18, wherein generating the second monotonic refractive index gradient during the second period of time comprises:
   applying a second force on a second side of the free propagation region to generate a second monotonic stress gradient across the free propagation region that decreases along the direction.
20. The method of any of statements 14 to 20, comprising:
   detecting, prior to the first period of time, a first peak transmission wavelength shift relative to a target peak transmission wavelength in a channel of the echelle grating mux/demux; and
   detecting, prior to the second period of time, a second peak transmission wavelength shift relative to the target peak transmission wavelength in the channel of the echelle grating mux/demux, wherein:
      the first monotonic refractive index gradient is generated in response to detecting the first peak transmission wavelength shift; and
      the second monotonic refractive index gradient is generated in response to detecting the second peak transmission wavelength shift.

## Claims

1. A photonic integrated circuit, comprising:
an echelle grating mux/demux comprising:
a plurality of waveguides comprising:
a set of input waveguides; and
a set of output waveguides;
an echelle grating; and
a free propagation region positioned between the echelle grating and the plurality of waveguides;
a light source unit optically connected to the set of input waveguides; a controller configured to:
measure an intensity of light using a power monitor optically connected to at least one of the set of output waveguides; and
control, based on the measured intensity of light, the echelle grating mux/demux to generate a monotonic refractive index gradient across the free propagation region.

2. The photonic integrated circuit of claim 1, wherein:
the echelle grating mux/demux comprises a first heater positioned on a first side of the free propagation region; and
the controller is operatively connected to the first heater.

3. The photonic integrated circuit of claim 2, wherein:
the echelle grating mux/demux comprises a second heater positioned on the first side of the free propagation region; and
the controller is operatively connected to the second heater.

4. The photonic integrated circuit of claim 2, wherein:
the echelle grating mux/demux comprises a second heater positioned on a second side of the free propagation region opposite the first side; and
the controller is operatively connected to the second heater.

5. The photonic integrated circuit of any of claims 2-4, comprising:
a slab waveguide that forms the free propagation region, wherein:
the first heater comprises a first doped region of the slab waveguide.

6. The photonic integrated circuit of claim 1, wherein:
the echelle grating mux/demux comprises a first force applicator positioned to selectively apply a force on a first side of the free propagation region; and
the controller is operatively connected to the first force applicator.

7. The photonic integrated circuit of claim 6, wherein:
the echelle grating mux/demux comprises a second force applicator positioned to selectively apply a force on a second side of the free propagation region; and
the controller is operatively connected to the second force applicator.

8. A method of operating an echelle grating mux/demux comprising a set of input waveguides, a set of output waveguides, an echelle grating, and a free propagation region, the method comprising:
generating, during a first period of time, a first monotonic refractive index gradient across the free propagation region that decreases along a direction; and
generating, during a second period of time, a second monotonic refractive index gradient across the free propagation region that increases along the direction.

9. The method of claim 8, wherein generating the first monotonic refractive index gradient during the first period of time comprises:
generating, using a first heater positioned on a first side of the free propagation region, a first monotonic temperature gradient across the free propagation region that decreases in the direction.

10. The method of claim 9, wherein:
a slab waveguide forms the free propagation region; and
the first heater comprises a doped region of the slab waveguide.

11. The method of claim 9 or claim 10, wherein generating the second monotonic refractive index gradient during the second period of time comprises:
generating, using a second heater positioned on a second side of the free propagation region, a second monotonic temperature gradient across the free propagation region the increases along the direction.

12. The method of claim 8, wherein generating the first monotonic refractive index gradient during the first period of time comprises:
applying a first force on a first side of the free propagation region to generate a first monotonic stress gradient across the free propagation region that increases along the direction.

13. The method of claim 12, wherein generating the second monotonic refractive index gradient during the second period of time comprises:
applying a second force on a second side of the free propagation region to generate a second monotonic stress gradient across the free propagation region that decreases along the direction.

14. The method of any of claims 8 to 13, comprising:
detecting, prior to the first period of time, a first peak transmission wavelength shift relative to a target peak transmission wavelength in a channel of the echelle grating mux/demux; and
detecting, prior to the second period of time, a second peak transmission wavelength shift relative to the target peak transmission wavelength in the channel of the echelle grating mux/demux, wherein:
the first monotonic refractive index gradient is generated in response to detecting the first peak transmission wavelength shift; and
the second monotonic refractive index gradient is generated in response to detecting the second peak transmission wavelength shift.
